# EUROPEAN PATENT APPLICATION

(11) **EP 4 485 890 A1**
(43) Date of publication of application: **01.01.2025**
(21) Application number: 23784318.0
(22) Date of filing: 06.04.2023
(51) Int. Cl.: H04L 45/24

(54) **TRANSMISSION PATH DETERMINATION METHOD AND APPARATUS**

(30) Priority: 08.04.2022 CN 202210364905
(71) Applicant: Huawei Technologies Co., Ltd., Shenzhen, Guangdong 518129 (CN)
(72) Inventor: CHEN, Weihan, Shenzhen, Guangdong 518129 (CN); ZHANG, Ka, Shenzhen, Guangdong 518129 (CN)
(74) Representative: Isarpatent
(86) International application number: PCT/CN2023/086545
(87) International publication number: WO 2023/193755

(57) **Abstract**

This application provides a transmission path determining method and apparatus. The method includes: A first network device obtains an SR policy, where the SR policy includes active path information and backup path information. The active path information includes a first update threshold and at least one first segment list, the first segment list indicates an SR path for traffic from the first network device to a second network device, and the first update threshold indicates a threshold used to update an SR path from the first network device to the second network device. When transmitting the traffic through a path indicated by the active path information, the first network device determines, based on the first update threshold and transmission performance of an SR path indicated by each first segment list, whether quality of service of the current transmission path meets an expectation, and if the expectation is not met, performs path updating to obtain an updated transmission path, so that the first network device transmits the traffic through the updated transmission path, thereby meeting expected quality of service and improving transmission efficiency of the traffic.

## Description

This application claims priority to Chinese Patent Application No. 202210364905.1, filed on April 8, 2022 and entitled "TRANSMISSION PATH DETERMINING METHOD AND APPARATUS", which is incorporated herein by reference in its entirety.

### TECHNICAL FIELD

This application relates to the field of communication technologies, and in particular, to a transmission path determining method and apparatus.

### BACKGROUND

A segment-routing (segment-routing, SR) policy (Policy) is a tunnel traffic diversion policy, and indicates a traffic transmission path by using a segment list. One SR policy is identified by a tuple: a headend (Headend), a color (Color), and an endpoint (Endpoint), and indicates a policy for diverting traffic from the headend to the endpoint. The color is used to distinguish between a plurality of SR policies between one headend and endpoint pair.

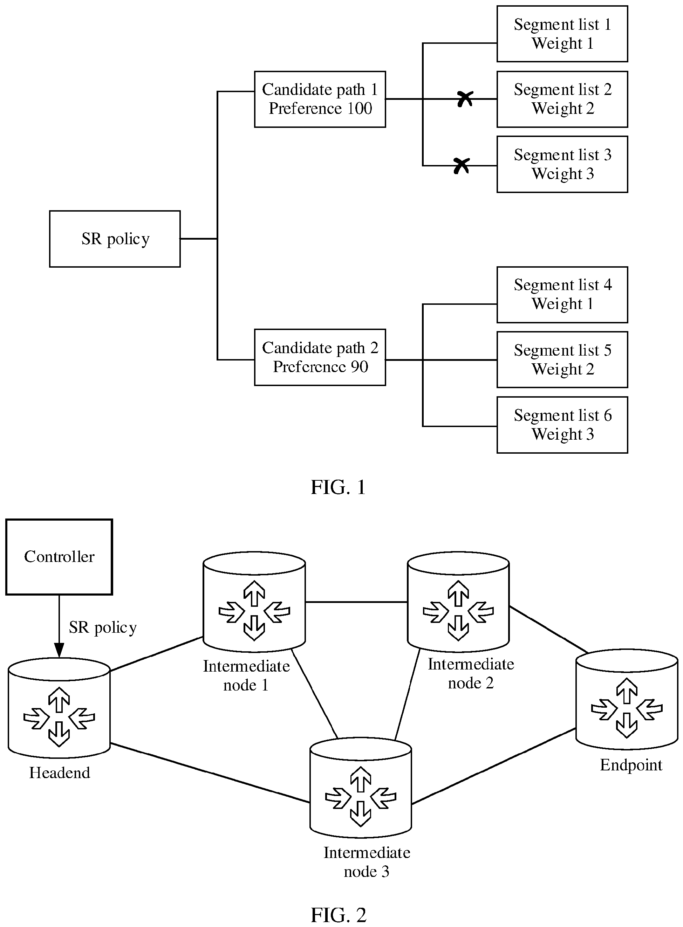

One SR policy may have a plurality of candidate paths (Candidate Paths), in which a candidate path with a highest preference (Preference) is preferentially selected as an active path, and a candidate path with a second highest preference is determined as a backup path. One candidate path may include one or more segment lists (Segment Lists). Each segment list represents a specific path from a headend to an endpoint, and may carry a weight (Weight) attribute, to facilitate load sharing of traffic. As shown in FIG. 1, when the SR policy has two candidate paths, because a candidate path 1 has a higher preference (100), the candidate path 1 is preferentially selected as an active path, and a candidate path 2 with a lower preference is selected as a backup path. In the figure, weights of segment lists 1 to 3 are 1, 2, and 3, respectively, indicating that a ratio of traffic passing through the three segment lists is 1: 2: 3.

In actual application, after enabling a link state detection function, a headend may perceive states of links in a current active path in real time, to determine, based on the states of the links in the active path, whether to perform path switching. Currently, only when perceiving that all segment lists in an active path are faulty, a headend triggers path switching to switch from the active path to a backup path. However, in some application scenarios, this switching manner results in poor transmission quality of service and affects service stability.

### SUMMARY

This application provides a transmission path determining method and apparatus, to optimize a transmission path when the transmission path does not meet quality of service, to ensure the quality of service.

According to a first aspect of this application, a transmission path determining method is provided. The method includes: A first network device obtains an SR policy, where the SR policy includes active path information and backup path information. The active path information includes a first update threshold and at least one first segment list, and the first segment list indicates an SR path for traffic from the first network device to a second network device. The first update threshold indicates a threshold used to update an SR path from the first network device to the second network device. After obtaining the SR policy, the first network device may determine an updated transmission path based on the first update threshold and transmission performance of an SR path indicated by each of the first segment lists, so that the first network device transmits the traffic through the updated transmission path, to meet expected quality of service, and improve transmission efficiency of the traffic.

In a specific implementation, the SR policy may include an SR policy based on multi-protocol label switching (multi-protocol label switching, MPLS) and an SR policy based on an internet protocol version 6 (internet protocol version 6, IPv6).

The first update threshold may indicate a minimum quantity of available SR paths or a minimum weight of an available SR path. Usually, when weights corresponding to the first segment lists included in an active path are the same, the first update threshold indicates a quantity of SR paths; or when weights corresponding to the first segment lists included in an active path are different, the first update threshold indicates a weight of an SR path.

In a specific implementation, the first network device may obtain the SR policy in a static configuration manner, or receive a control packet delivered by a controller, where the control packet includes the SR policy. The control packet may be a border gateway protocol (border gateway protocol, BGP) packet or a path computation element communication protocol (path computation element communication protocol, PCEP) packet. The control packet may include a first type-length-value (Type-Length-Value, TLV). The first update threshold is carried in a value field of the first TLV.

When transmitting the traffic through a path indicated by the active path information, the first network device determines, based on the first update threshold of the active path information and the transmission performance of the SR path indicated by each first segment list, whether quality of service of the currently used transmission path meets an expectation, and if the expectation is not met, performs path updating to obtain an updated transmission path, so that the traffic is transmitted through the updated transmission path.

In a specific implementation, the first network device may determine an available first segment list based on the transmission performance of the SR path indicated by each first segment list, and then determine whether a segment list parameter value corresponding to the available first segment list is less than the first update threshold. The first network device updates a transmission path when the segment list parameter value corresponding to the available first segment list is less than the first update threshold.

This application provides two manners of updating the transmission path. In one manner, the transmission path is switched from an active path to a backup path. In the other manner, an unavailable first segment list in the active path is replaced with a part of second segment lists in the backup path, and then, an SR path indicated by the available first segment list in the active path and SR paths indicated by the part of second segment lists are used as updated transmission paths. The following separately describes the two update manners.
(1) The transmission path is switched from the active path to the backup path.

The first network device may determine the available first segment list based on the transmission performance of the SR path indicated by each first segment list, and then compare the segment list parameter value corresponding to the available first segment list with the first update threshold. When the segment list parameter value corresponding to the available first segment list is less than the first update threshold, it indicates that the SR path indicated by the active path information does not meet quality of service, and the first network device may determine an SR path indicated by a second segment list in the backup path information as an updated transmission path, to transmit the traffic to the second network device through the backup path. The segment list parameter value may indicate a quantity of available first segment lists or a sum of weights of available first segment lists.

In a specific implementation, the first network device may obtain transmission performance parameters corresponding to SR paths for transmitting the traffic that are indicated by all first segment lists, and determine, as the available first segment list, a first segment list corresponding to an SR path whose transmission performance parameter value is less than a transmission performance threshold. The transmission performance threshold may include a latency threshold, a jitter threshold, a packet loss threshold, or the like. Correspondingly, the transmission performance parameter includes a latency, jitter, a packet loss, or the like.

The transmission performance threshold may be included in the active path information. When the SR policy of the first network device is delivered by the controller through the control packet, the controller may deliver the transmission performance threshold and the first update threshold to the first network device through the same control packet. Specifically, the first update threshold is carried in the value field of the first TLV in the control packet, and the transmission performance threshold may be carried in a reserved field of the first TLV in the control packet, or the transmission performance threshold is carried in a value field of a second TLV in the control packet.

(2) The unavailable first segment list in the active path is replaced with the part of second segment lists in the backup path.

In another possible implementation, after the first network device determines the available first segment list based on the transmission performance of the SR path indicated by each first segment list, when the segment list parameter value corresponding to the available first segment list is less than the first update threshold, the first network device may set an SR path indicated by the unavailable first segment list to an invalid state, then select the part of second segment lists from second segment lists included in the backup path information and set the part of second segment lists to a valid state, and replace the unavailable first segment list in the active path information, therefore, the available first segment list in the active path information and the selected part of second segment lists in the backup path information are used as the updated transmission paths.

Further, to ensure that quality of service of the selected part of second segment lists in the backup path and the available first segment list in the active path, as the transmission paths, meets an expected requirement, when the first update threshold indicates a minimum quantity of SR paths used for traffic transmission, the segment list parameter value corresponding to the available first segment list obtained by the first network device is a quantity of available first segment lists. In this case, a quantity of the part of second segment lists selected by the first network device from the backup path information cannot be less than a difference between the first update threshold and the segment list parameter value. In another possible implementation, when the first update threshold indicates a minimum weight of an SR path used for traffic transmission, the segment list parameter value corresponding to the available first segment list obtained by the first network device is a sum of weights of available first segment lists. In this case, a sum of weights of the part of second segment lists selected by the first network device from the backup path information cannot be less than a difference between the first update threshold and the segment list parameter value, thereby ensuring that quality of service of the updated transmission path meets a requirement.

According to a second aspect of this application, a transmission path determining apparatus is provided. The apparatus includes an obtaining unit and a determining unit.

The obtaining unit is configured to obtain a segment-routing SR policy, where the segment-routing policy includes active path information and backup path information, the active path information includes a first update threshold and at least one first segment list, the at least one first segment list indicates an SR path for traffic from a first network device to a second network device, and the first update threshold indicates a threshold used to update an SR path from the first network device to the second network device.

The determining unit is configured to determine an updated transmission path based on the first update threshold and transmission performance of an SR path indicated by each of the at least one first segment list.

In a specific implementation, the determining unit is specifically configured to: determine an available first segment list in the at least one first segment list based on the transmission performance of the SR path indicated by each of the at least one first segment list; and when a segment list parameter value corresponding to the available first segment list in the at least one first segment list is less than the first update threshold, determine an SR path indicated by at least one second segment list included in the backup path information as the updated transmission path.

In a specific implementation, the determining unit is specifically configured to: determine an available first segment list in the at least one first segment list based on the transmission performance of the SR path indicated by each of the at least one first segment list; when a segment list parameter value corresponding to the available first segment list in the at least one first segment list is less than the first update threshold, determine an SR path indicated by an unavailable first segment list in the at least one first segment list as an invalid state; select a part of second segment lists from at least one second segment list included in the backup path information; and replace the unavailable first segment list with the part of second segment lists, to obtain the updated transmission path.

In a specific implementation, the first update threshold indicates a quantity of SR paths, and a quantity of the part of second segment lists is not less than a difference between the first update threshold and the segment list parameter value; or
the first update threshold indicates a weight of an SR path, and a sum of weights of the part of second segment lists is not less than a difference between the first update threshold and the segment list parameter value.

In a specific implementation, when weights of all first segment lists in the at least one first segment list are the same, the first update threshold indicates the quantity of SR paths; or when weights of all first segment lists in the at least one first segment list are different, the first update threshold indicates the weight of the SR path.

In a specific implementation, the active path information further includes a transmission performance threshold; and the determining unit is specifically configured to: obtain transmission performance parameters corresponding to SR paths for transmitting the traffic that are indicated by all the first segment lists in the at least one first segment list; and determine, as the available first segment list, a first segment list corresponding to an SR path whose transmission performance parameter value is less than the transmission performance threshold.

In a specific implementation, the transmission performance threshold includes one or more of a latency, jitter, or a packet loss.

In a specific implementation, the obtaining unit is specifically configured to receive a control packet sent by a controller, where the control packet includes the SR policy.

In a specific implementation, the control packet includes a first type-length-value TLV, and a value field of the first TLV carries the first update threshold.

In a specific implementation, a reserved field of the first TLV carries the transmission performance threshold.

In a specific implementation, the control packet further includes a second TLV, and a value field of the second TLV carries the transmission performance threshold.

In a specific implementation, the control packet is a border gateway protocol BGP packet, or the control packet is a path computation element communication protocol PCEP packet.

In a specific implementation, the SR policy includes an SR policy based on multi-protocol label switching MPLS and an SR policy based on an internet protocol version 6 IPv6.

According to a third aspect of this application, a communication device is provided. The device includes a processor and a memory, where
the memory is configured to store instructions or a computer program; and
the processor is configured to execute the instructions or the computer program in the memory, so that the communication device performs the method according to the first aspect.

According to a fourth aspect of this application, a computer-readable storage medium is provided, including instructions. When the instructions are run on a computer, the computer is enabled to perform the method according to the first aspect.

According to a fifth aspect of this application, a computer program product is provided. The computer program product includes a program, and when the program is run on a processor, a computer or a network device is enabled to perform the method according to the first aspect.

According to the technical solutions provided in this application, the first network device obtains the SR policy, where the SR policy includes the active path information and the backup path information. The active path information includes the first update threshold and the at least one first segment list, and the at least one first segment list indicates the SR path for the traffic from the first network device to the second network device. The first update threshold indicates the threshold used to update the SR path from the first network device to the second network device. When transmitting the traffic through the path indicated by the active path information, the first network device determines, based on the first update threshold and the transmission performance of the SR path indicated by each first segment list, whether the quality of service of the current transmission path meets the expectation, and if the expectation is not met, performs path updating to obtain an updated transmission path, so that the first network device transmits the traffic through the updated transmission path, thereby meeting the expected quality of service and improving the transmission efficiency of the traffic.

### BRIEF DESCRIPTION OF DRAWINGS

To describe the technical solutions in embodiments of this application or the conventional technology more clearly, the following briefly describes accompanying drawings for describing embodiments or the conventional technology. It is clear that the accompanying drawings in the following descriptions show only some embodiments recorded in this application, and a person of ordinary skill in the art may still derive other accompanying drawings from these accompanying drawings without creative efforts.
FIG. 1 is a diagram of an SR policy according to an embodiment of this application;
FIG. 2 is a diagram of an application scenario according to an embodiment of this application;
FIG. 3 is a flowchart of a transmission path determining method according to an embodiment of this application;
FIG. 4 is a diagram of a structure of a TLV according to an embodiment of this application;
FIG. 5 is a diagram of another application scenario according to an embodiment of this application;
FIG. 6 is a diagram of a structure of a transmission path determining apparatus according to an embodiment of this application;
FIG. 7 is a diagram of a structure of a communication device according to an embodiment of this application; and
FIG. 8 is a diagram of a structure of another communication device according to an embodiment of this application.

### DESCRIPTION OF EMBODIMENTS

To make a person skilled in the art understand the technical solutions in this application better, the following clearly and completely describes the technical solutions in embodiments of this application with reference to the accompanying drawings in embodiments of this application. It is clear that the described embodiments are merely some rather than all of embodiments of this application.

SR is a protocol designed based on a source routing concept to forward a data packet over a network. A basic concept of SR is to divide a network path into segments, and allocate segment identities (segment identities, SIDs) to these segments and forwarding nodes on the network, and a segment list may be obtained by sequentially arranging segments and network nodes, that is, corresponds to one forwarding path. SR mainly includes two implementations: SR on an IPv6 forwarding plane, namely, segment-routing IPv6 (SRv6), and SR on an MPLS forwarding plane, namely, segment-routing MPLS (SR-MPLS).

An SR policy is a tunnel traffic diversion policy, indicates a traffic transmission path by using a segment list, and can be directly applicable to the preceding two SR implementations. That is, the SR policy includes an SRv6 policy and an SR-MPLS policy. Usually, one SR policy may be identified by a triplet, and the triplet includes <Headend Color Endpoint>. The headend may generate an SR policy and execute the SR policy, or receive an SR policy sent by another device and execute the SR policy. The endpoint is a termination node of an SR policy. The color is an important attribute of an SR policy, indicates a specific manner (for example, a low latency or low costs) of reaching the endpoint, and is used to distinguish between a plurality of SR policies between one headend and endpoint pair. The headend and the endpoint in the triplet are represented in a form of an internet protocol (Internet Protocol, IP) address, and the IP address may be an internet protocol version 4 (internet protocol version 4, IPv4) address or an IPv6 address.

One SR policy may have a plurality of candidate paths. Each candidate path corresponds to a preference (Preference). A candidate path with a highest preference is preferentially selected as an active path. After a hot standby (Hot Standby) protection mechanism is enabled, a candidate path with a second highest preference can be selected as a backup path, so that when transmission performance of the active path does not meet a requirement, the backup path can be used to transmit traffic. A candidate path may include a plurality of segment lists, and each segment list indicates a specific path for transmitting the traffic from a headend to an endpoint. Each segment list may have an associated load balancing weight, to help implement load sharing of the traffic. For a candidate path that is selected as the active path, all segment lists included in the candidate path have traffic, and traffic allocated to each segment list is determined based on a weight corresponding to the segment list. Each segment list includes one or more segment identities SIDs that indicate nodes through which traffic needs to pass during transmission, and the SIDs may be IPv4 addresses or IPv6 addresses corresponding to the nodes.

It can be learned from FIG. 1 that, a candidate path 1 has a higher preference (Preference) (100), so that the candidate path 1 is preferentially selected as an active path, and a candidate path 2 with a second highest preference is selected as a backup path. After the active path is determined, a headend delivers a forwarding entry to a forwarding plane based on segment list content carried by the active path, to guide forwarding of traffic through the forwarding entry. Weights of segment lists (Segment List 1 to Segment List 3) corresponding to the active path in FIG. 1 are 1, 2, and 3, respectively, indicating that a ratio of traffic passing through the three segment lists is 1: 2: 3. When the headend needs to transmit traffic 1, the headend allocates 1/6 of the traffic 1 to the segment list 1, 2/6 of the traffic 1 to the segment list 2, and 3/6 of the traffic 1 to the segment list 3.

When a headend transmits traffic through a determined active path, the headend may enable a link state detection function, to perceive a state of each transmission path in the current active path in real time, and determine, based on the state of the transmission path, whether to switch the path. Currently, a headend switches to a backup path only when all segment lists in an active path are faulty. For example, when a link of the segment list 2 and a link of the segment list 3 are disconnected, all the traffic is transmitted to an endpoint through the segment list 1. When all links of the segment list 1 to the segment list 3 are disconnected, the headend switches from the candidate path 1 to the candidate path 2. However, before the headend switches to the backup path, the link, namely, the segment list 1 carries much more traffic than an expectation. As a result, quality of service is lower than an expectation, and service stability is affected.

In view of this, embodiments of this application provide a transmission path determining method, to optimize a transmission path when the transmission path does not meet quality of service, to ensure the quality of service. During specific implementation, a first network device obtains an SR policy, where the SR policy includes active path information and backup path information. The active path information includes a first update threshold and at least one first segment list, and the at least one first segment list indicates an SR path for traffic from the first network device to a second network device. The first update threshold indicates a threshold used to update an SR path from the first network device to the second network device. When transmitting the traffic through a path indicated by the active path information, the first network device determines, based on the first update threshold and transmission performance of an SR path indicated by each first segment list, whether quality of service of the current transmission path meets an expectation, and if the expectation is not met, performs path updating to obtain an updated transmission path, so that the first network device transmits the traffic through the updated transmission path, thereby meeting expected quality of service. Path updating does not need to be triggered only when all segment lists in the active path are faulty. This improves transmission efficiency of the traffic.

The following describes, with reference to an application scenario, a principle for implementing traffic transmission in embodiments of this application.

An application scenario shown in FIG. 2 represents a network system for implementing traffic transmission. In the network system, an example in which five nodes are included is used for description. Specifically, the network system includes a headend, an intermediate node 1, an intermediate node 2, an intermediate node 3, and an endpoint. Each node may also be referred to as a network device, and is a device having a traffic transmission function in the network system, for example, may be a router, a switch, a virtual routing device, or a virtual forwarding device. During traffic transmission, the headend may determine a transmission path based on an obtained SR policy, and further transmit traffic through the determined transmission path. A manner in which the headend obtains the SR policy includes static configuration, or obtaining the SR policy from a controller shown in FIG. 2. Specifically, the controller may obtain a topology structure of a controlled network, perform path computation based on the topology structure to generate an SR policy, and further deliver the SR policy to the headend. The controller may use BGP or PCEP to deliver the SR policy to the headend.

As shown in FIG. 2, a solid line between two nodes represents a transmission path of the traffic. In this application scenario, the traffic is transmitted from the headend to the endpoint along the following paths: headend-intermediate node 1-intermediate node 2-endpoint, headend-intermediate node 1-intermediate node 3-endpoint, headend-intermediate node 3-endpoint, and headend-intermediate node 3-intermediate node 2-endpoint. An active path in the SR policy obtained by the headend includes a segment list 1 and a segment list 2. The segment list 1 is {headend-intermediate node 1-intermediate node 2-endpoint}, and the segment list 2 is {headend-intermediate node 3-endpoint}. A backup path includes a segment list 3 and a segment list 4. The segment list 3 is {headend-intermediate node 1-intermediate node 3-endpoint}, and the segment list 4 is {headend-intermediate node 3-intermediate node 2-endpoint}. When transmitting the traffic to the endpoint, the headend transmits the traffic through both the segment list 1 and the segment list 2. A size of traffic allocated to each segment list is related to a weight corresponding to the segment list.

In a possible case, the headend may be a node that generates a service packet, and implements traffic transmission by forwarding the service packet. In this case, the headend may be a node indicated by a source address in the service packet. In this case, the headend is the first node on a transmission path of the service packet. In another possible case, a source node on the transmission path corresponding to the service packet is another node, and the headend is connected to the source node.

In a possible case, the endpoint may be a node indicated by a destination address in a service packet. In another case, the endpoint is a node connected to a node indicated by a destination address.

The intermediate node 1, the intermediate node 2, and the intermediate node 3 are end devices located between the headend and the endpoint during service packet forwarding.

It should be noted that a quantity of nodes required for traffic transmission in the foregoing application scenario is merely an example for description. In actual application, a node for implementing traffic transmission may be set based on a specific application scenario. This is not limited in embodiments of this application. After the principle for traffic transmission is described, the following describes, with reference to the accompanying drawings, the transmission path determining method provided in embodiments of this application.

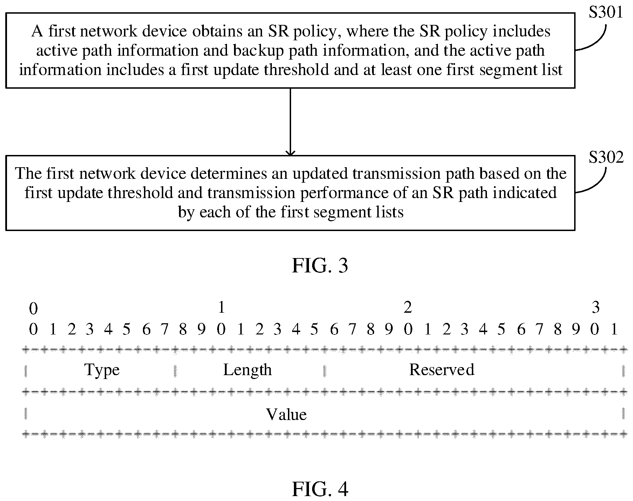

FIG. 3 is a flowchart of the transmission path determining method according to an embodiment of this application.

The method mainly includes the following steps.

S301: A first network device obtains an SR policy, where the SR policy includes active path information and backup path information.

To implement traffic transmission, the first network device needs to obtain the SR policy, to determine, based on the SR policy, a transmission path required for traffic transmission. The SR policy indicates a corresponding transmission path for transmitting traffic from the first network device to a second network device. In this embodiment, the first network device may correspond to the headend in FIG. 2, and the second network device corresponds to the endpoint in FIG. 2.

It can be learned from the foregoing embodiment that one SR policy may include a plurality of candidate paths, and each candidate path corresponds to one preference. The first network device may use a candidate path with a highest preference as an active path, and use a candidate path with a second highest preference as a backup path. After the active path and the backup path are determined, the active path information and the backup path information may be obtained from the SR policy. The active path information includes a first update threshold and at least one first segment list, and the at least one first segment list indicates the active path. The first segment list indicates an SR path for traffic from the first network device to the second network device. When the active path includes a plurality of first segment lists, each first segment list indicates an SR path for transmitting the traffic from the first network device to the second network device. For example, in the application scenario shown in FIG. 2, the active path includes two first segment lists: the segment list 1 and the segment list 2.

The first update threshold indicates a threshold used to update an SR path from the first network device to the second network device. The first network device may determine, based on the first update threshold, whether to update a currently used transmission path. A specific representation form of the first update threshold may be determined based on an actual application scenario. Specifically, the first update threshold may indicate a quantity of SR paths. In one case, the first update threshold indicates a minimum quantity of available SR paths during traffic transmission. For example, if the first update threshold is 3, it indicates that at least three SR paths are used for transmission during traffic transmission. In another case, the first update threshold indicates a maximum quantity of unavailable SR paths during traffic transmission. For example, if the first update threshold is 2, it indicates that there are at most two unavailable SR paths during traffic transmission. Alternatively, the first update threshold may indicate a weight of an SR path. In one case, the first update threshold indicates a minimum weight of an available SR path during traffic transmission. For example, if the first update threshold is 4, it indicates that a sum of weights of available SR paths during traffic transmission is not less than 4. In one case, the first update threshold indicates a maximum weight of an unavailable SR path during traffic transmission. For example, if the first update threshold is 2, it indicates that a sum of weights of unavailable SR paths during traffic transmission is not greater than 2.

Usually, when weights corresponding to the first segment lists included in an active path are the same, the first update threshold indicates the quantity of SR paths; or when weights corresponding to the first segment lists included in an active path are different, the first update threshold indicates the weight of the SR path. Alternatively, when the first network device implements load sharing according to an equal cost multiple path (equal cost multiple path, ECMP) routing protocol, the first update threshold indicates the quantity of SR paths; or when the first network device implements load sharing according to an unequal cost multiple path (unequal cost multiple path, UCMP) routing protocol, the first update threshold indicates the weight of the SR path.

Similarly, the backup path information includes a second update threshold and at least one second segment list. The second segment list indicates an SR path for the traffic from the first network device to the second network device. When the backup path includes a plurality of second segment lists, each second segment list may indicate an SR path for the traffic from the first network device to the second network device. For example, in the application scenario shown in FIG. 2, the backup path includes two second segment lists: the segment list 3 and the segment list 4. Each second segment list may have an associated weight, to help implement load sharing of the traffic. The second update threshold indicates a threshold used to update an SR path from the first network device to the second network device, and may represent a quantity of SR paths for traffic transmission or a weight corresponding to the SR path. For a specific representation of the second update threshold, refer to the foregoing related descriptions of the first update threshold.

The first network device may obtain the SR policy in a static configuration manner, or receive the SR policy delivered by a controller. Specifically, the first network device receives a control packet sent by the controller, where the control packet includes the SR policy. The control packet may be a BGP packet or a PCEP packet, the control packet may include a first type-length-value (Type-Length-Value, TLV), and the first update threshold is carried in a value field of the first TLV. To be specific, the controller includes the first update threshold in a manner of adding an optional TLV to the control packet. A structure of a TLV is shown in FIG. 4, and includes a type (Type) field, a length (Length) field, a reserved (Reserved) field, and a value (Value) field. The value field is used to carry the first update threshold.

Optionally, the second update threshold may be included by adding another TLV to the control packet.

S302: The first network device determines an updated transmission path based on the first update threshold and transmission performance of an SR path indicated by each of the first segment lists.

When transmitting the traffic through a path indicated by the active path information, the first network device determines, based on the first update threshold of the active path information and the transmission performance of the SR path indicated by each first segment list, whether quality of service of the currently used transmission path meets an expectation, and if the expectation is not met, performs path updating to obtain an updated transmission path, so that the traffic is transmitted through the updated transmission path.

During specific implementation, the first network device may determine an available first segment list based on the transmission performance of the SR path indicated by each first segment list, that is, determine a first segment list whose transmission performance meets a preset performance requirement. After the available first segment list is determined, it is determined whether a segment list parameter value corresponding to the available first segment list is less than the first update threshold. The first network device updates a transmission path when the segment list parameter value corresponding to the available first segment list is less than the first update threshold. This embodiment of this application provides two manners of updating the transmission path. In one manner, the transmission path is switched from an active path to a backup path. In the other manner, an unavailable first segment list in the active path is replaced with a part of second segment lists in the backup path, and then, an SR path indicated by the available first segment list in the active path and SR paths indicated by the part of second segment lists are used as updated transmission paths. The following separately describes the two update manners.
(1) The transmission path is switched from the active path to the backup path.

The first network device may determine the available first segment list based on the transmission performance of the SR path indicated by each first segment list, and then compare the segment list parameter value corresponding to the available first segment list with the first update threshold. When the segment list parameter value is greater than or equal to the first update threshold, it indicates that the SR path indicated by the active path information meets quality of service, and the SR path indicated by the active path information may be used for traffic transmission. When the segment list parameter value corresponding to the available first segment list is less than the first update threshold, it indicates that the SR path indicated by the active path information does not meet quality of service, and the first network device may determine an SR path indicated by a second segment list in the backup path information as an updated transmission path. In other words, the first network device switches the transmission path used for traffic transmission from the active path to the backup path, to transmit the traffic to the second network device through the backup path. A specific implementation of switching from the active path to the backup path is as follows: The first network device sets the active path to an invalid state and sets the backup path to a valid state, so that the backup path is in an available state.

The segment list parameter value may indicate a quantity of available first segment lists or a sum of weights of available first segment lists. Specifically, when the first update threshold indicates a minimum quantity of SR paths used for traffic transmission, the segment list parameter value is the quantity of available first segment lists. When the first update threshold indicates a minimum weight of an SR path used for traffic transmission, the segment list parameter value is the sum of the weights of available first segment lists. The first update threshold may further indicate a minimum weight proportion of an SR path used for traffic transmission. In this case, the segment list parameter value corresponding to the obtained available first segment list is a ratio of the sum of the weights of the available first segment lists to a sum of weights of all the first segment lists. In this way, the segment list parameter value can be compared with the first update threshold.

When the first network device determines whether a first segment list is available, this embodiment of this application provides a possible implementation. Specifically, the first network device obtains transmission performance parameters corresponding to SR paths for transmitting the traffic that are indicated by all the first segment lists. The first network device determines, as the available first segment list, a first segment list corresponding to an SR path whose transmission performance parameter value is less than a transmission performance threshold. The transmission performance parameter is used to reflect transmission quality of an SR path, and the transmission performance threshold is used to reflect expected transmission quality. To be specific, the first network device may monitor transmission quality corresponding to the SR paths for transmitting the traffic that are indicated by all the first segment lists, and if the transmission quality meets the expected transmission quality, determine the first segment list corresponding to the transmission quality as the available first segment list, or if the transmission quality does not meet the expected transmission quality, determine the first segment list corresponding to the transmission quality as an unavailable first segment list.

The transmission performance threshold may include a latency threshold, a jitter threshold, a packet loss threshold, or the like. Correspondingly, the transmission performance parameter includes a latency, jitter, a packet loss, or the like. For example, when the transmission performance threshold is the latency threshold, the first network device obtains latencies corresponding to the SR paths for transmitting the traffic that are indicated by all the first segment lists; and determines whether the latency corresponding to each SR path is less than the latency threshold, and if yes, determines a first segment list that meets the condition as an available first segment list, or otherwise, determines a first segment list that does not meet the condition as an unavailable first segment list. When the transmission performance threshold is the jitter or the packet loss, a principle of determining the available first segment list is the same. Details are not described again. When the transmission performance threshold includes more of the latency threshold, the jitter threshold, or the packet loss threshold, the obtained transmission performance parameter also includes a plurality of performance parameters. In this case, when each performance parameter in the transmission performance parameter is less than a corresponding threshold, a first segment list corresponding to the transmission performance parameter is determined as an available first segment list.

The transmission performance threshold is included in the active path information. When the SR policy of the first network device is delivered by the controller through the control packet, the controller may deliver the transmission performance threshold and the first update threshold to the first network device through the same control packet. Specifically, the first update threshold is carried in the value field of the first TLV in the control packet, and the transmission performance threshold may be carried in a reserved field of the first TLV in the control packet, or the transmission performance threshold is carried in a value field of a second TLV in the control packet. Certainly, the controller may alternatively deliver the first update threshold and the transmission performance threshold to the first network device through different control packets. This is not limited in embodiments of this application.

In a preferred implementation, after the transmission path is switched from the active path to the backup path, it may also be determined whether quality of service of an SR path indicated by the backup path information meets a requirement. To be specific, the first network device may determine, based on the second update threshold in the backup path information and transmission performance of an SR path indicated by each second segment list, whether quality of service of the backup path meets the expectation. The second update threshold may indicate a minimum quantity of SR paths used for traffic transmission or a minimum weight of an SR path.

Specifically, the first network device determines an available second segment list based on the transmission performance of the SR path indicated by each second segment list. For a specific manner of determining the available second segment list based on the transmission performance of the SR path indicated by the second segment list, refer to the foregoing embodiment. Details are not described herein again. Based on all available second segment lists, segment list parameter values corresponding to the available second segment lists are determined, where the segment list parameter value may indicate a quantity of the available second segment lists or weights of the available first segment lists. To be specific, when the second update threshold indicates the minimum quantity of SR paths used for traffic transmission, the obtained segment list parameter value is the quantity of the available second segment lists; or when the second update threshold indicates the minimum weight of an SR path for implementing traffic transmission, the obtained segment list parameter value is a sum of the weights of the available second segment lists. Then, the segment list parameter value is compared with the second update threshold. When the segment list parameter value is greater than or equal to the second update threshold, it indicates that the SR path indicated by the backup path information meets quality of service, and the SR path indicated by the backup path information may be used for traffic transmission. When the segment list parameter value is less than the second update threshold, it indicates that the quality of service of the SR path indicated by the backup path information does not meet the requirement. To be specific, a step such as switching the transmission path to a candidate path whose preference ranks third may continue to be performed.

(2) The unavailable first segment list in the active path is replaced with the part of second segment lists in the backup path.

In the foregoing embodiment, when the SR path, as the transmission path, indicated by the active path information does not meet the expected quality of service, the transmission path may be switched from the active path to the backup path, to implement traffic transmission through the SR path indicated by the backup path information. In another possible implementation, when the first network device determines that the segment list parameter value corresponding to the available first segment list in the active path is less than the first update threshold, the first network device may first set an SR path indicated by the unavailable first segment list to an invalid state, then select the part of second segment lists from the second segment lists included in the backup path information and set the part of second segment lists to a valid state, and replace the unavailable first segment list in the active path information, therefore, the available first segment list in the active path information and the selected part of second segment lists in the backup path information are used as the updated transmission paths, and the first network device may perform traffic transmission through the SR paths that are indicated by the available first segment list and the selected part of second segment lists.

To ensure that quality of service of the available first segment list in the active path and the selected part of second segment lists in the backup path, as transmission paths, meets an expected requirement, the first network device needs to determine the selected part of second segment lists with reference to the first update threshold. Specifically, when the first update threshold indicates the minimum quantity of SR paths used for traffic transmission, after the first network device determines the available first segment list, the segment list parameter value corresponding to the obtained available first segment list is the quantity of available first segment lists. In this case, a quantity of the part of second segment lists selected by the first network device from the backup path information cannot be less than a difference between the first update threshold and the segment list parameter value. In this way, it can be ensured that quality of service of an updated transmission path meets a requirement after the part of second segment lists replace the unavailable first segment list. In a possible implementation, when weights corresponding to all the second segment lists in the backup path information are different, a second segment list with a larger weight may be preferentially selected to replace the unavailable first segment list in the active path information, thereby improving transmission efficiency of the traffic.

Similarly, when the first update threshold indicates the minimum weight of the SR path used for traffic transmission, the segment list parameter value corresponding to the available first segment list obtained by the first network device is a sum of weights of available first segment lists. In this case, a sum of weights of a part of second segment lists selected by the first network device from the backup path information cannot be less than a difference between the first update threshold and the segment list parameter value, and then the unavailable first segment list is replaced with the selected part of second segment lists, thereby ensuring that the quality of service of the updated transmission path meets the requirement.

When the transmission path is determined in the foregoing embodiment, the first update threshold indicates the minimum quantity of the SR paths used for traffic transmission or the minimum weight of the SR path used for traffic transmission. Therefore, the first network device needs to determine the available first segment list based on the transmission performance of the SR path indicated by each first segment list, and determines whether the quantity of the available first segment lists or the weight of the available first segment list is not less than the first update threshold. In another possible implementation, the first update threshold may further indicate a maximum quantity of SR paths that cannot be used for traffic transmission or a maximum weight of an SR path that cannot be used for traffic transmission, and the segment list parameter value indicates a quantity of unavailable SR paths or a weight of an unavailable SR path. In this case, the first network device may determine an unavailable first segment list based on the transmission performance of the SR path indicated by each first segment list, then compare a segment list parameter value corresponding to the unavailable first segment list with the first update threshold, and further determine, based on a comparison result, whether to perform path updating. Specifically, when the segment list parameter value is less than the first update threshold, it indicates that a quantity unavailable first segment lists or a weight of the unavailable first segment list is less than a threshold. In this case, the SR path indicated by the available first segment list in the active path information meets a quality of service requirement of the transmission path. When the segment list parameter value is greater than or equal to the first update threshold, it indicates that a quantity of unavailable first segment lists or a weight of the unavailable first segment list is greater than or equal to a threshold. In this case, the SR path indicated by the available first segment list in the active path information does not meet the expected requirement, and the first network device needs to update the transmission path.

According to the transmission path determining method provided in this embodiment of this application, when transmission quality of the SR path indicated by the active path information does not meet an expectation, the first network device may update the path to obtain an updated transmission path, so that the first network device can transmit the traffic through the updated transmission path, to optimize quality of service of the transmission path and improve the transmission efficiency of the traffic.

The following describes, with reference to a specific application scenario, the transmission path determining method provided in embodiments of this application.

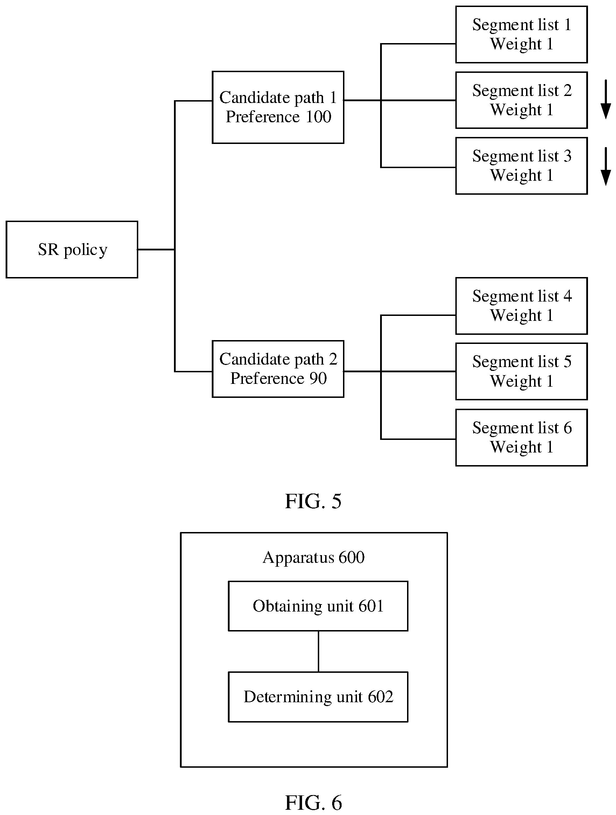

Refer to FIG. 5. An SR policy has two candidate paths (Candidate Paths). A candidate path 1 has a higher preference (100), so that the candidate path 1 is preferentially selected as an active path, and a candidate path 2 with a second highest preference (90) is selected as a backup path. Active path information includes a first update threshold (for example, a minimum quantity of paths) and three first segment lists: a segment list 1, a segment list 2, and a segment list 3. Weights of all the first segment list are 1, 1, and 1, respectively, indicating that a ratio of traffic passing through the three segment lists is 1: 1: 1. The first update threshold is set to 2, indicating that a minimum quantity of SR paths used for traffic transmission is 2. Backup path information includes a second update threshold and three second segment lists: a segment list 4, a segment list 5, and a segment list 6. Weights of all the second segment lists are 1, 1, and 1, respectively. The second update threshold is set to 2, indicating that a minimum quantity of SR paths used for traffic transmission is 2.

In this application scenario, when transmitting traffic through the active path, a first network device may monitor transmission performance of the active path. A transmission performance threshold is set to a latency threshold. After obtaining latencies of the segment list 1 to the segment list 3, the first network device compares the latencies of the segment list 1 to the segment list 3 with the latency threshold, and determines that both the latency of the segment list 2 and the latency of the segment list 3 are both greater than the latency threshold. In this case, an available first segment list is only the segment list 1, and a corresponding segment list parameter is 1 that is less than the first update threshold 2. Therefore, an SR path indicated by the active path information does not meet an expected requirement. In this case, the first network device may determine the backup path as an updated transmission path, and transmit the traffic through the backup path. When transmitting the traffic through the backup path, the first network device may detect transmission performance of the backup path, to separately obtain latencies corresponding to the segment list 4 to the segment list 6. When it is determined that the latencies corresponding to the segment list 4 to the segment list 6 are all less than the latency threshold, it indicates that SR paths indicated by the three second segment lists are all available, and a corresponding segment list parameter value is 3 that is greater than the second update threshold 2. Therefore, the path does not need to be updated.

For beneficial effects of the transmission path determining method provided in this embodiment, refer to the foregoing method embodiments. Details are not described herein again.

Based on the foregoing method embodiments, embodiments of this application provides a transmission path determining apparatus. The following describes the apparatus with reference to the accompanying drawings.

FIG. 6 is a diagram of a structure of the transmission path determining apparatus according to an embodiment of this application.

An apparatus 600 includes an obtaining unit 601 and a determining unit 602.

The obtaining unit 601 is configured to obtain a segment-routing SR policy, where the segment-routing policy includes active path information and backup path information, the active path information includes a first update threshold and at least one first segment list, the at least one first segment list indicates an SR path for traffic from a first network device to a second network device, and the first update threshold indicates a threshold used to update an SR path from the first network device to the second network device.

The determining unit 602 is configured to determine an updated transmission path based on the first update threshold and transmission performance of an SR path indicated by each of the at least one first segment list.

In a specific implementation, the determining unit 602 is specifically configured to: determine an available first segment list in the at least one first segment list based on the transmission performance of the SR path indicated by each of the at least one first segment list; and when a segment list parameter value corresponding to the available first segment list in the at least one first segment list is less than the first update threshold, determine an SR path indicated by at least one second segment list included in the backup path information as the updated transmission path.

In a specific implementation, the determining unit 602 is specifically configured to: determine an available first segment list in the at least one first segment list based on the transmission performance of the SR path indicated by each of the at least one first segment list; when a segment list parameter value corresponding to the available first segment list in the at least one first segment list is less than the first update threshold, determine an SR path indicated by an unavailable first segment list in the at least one first segment list as an invalid state; select a part of second segment lists from at least one second segment list included in the backup path information; and replace the unavailable first segment list with the part of second segment lists, to obtain the updated transmission path.

In a specific implementation, the first update threshold indicates a quantity of SR paths, and a quantity of the part of second segment lists is not less than a difference between the first update threshold and the segment list parameter value; or
the first update threshold indicates a weight of an SR path, and a sum of weights of the part of second segment lists is not less than a difference between the first update threshold and the segment list parameter value.

In a specific implementation, when weights of all first segment lists in the at least one first segment list are the same, the first update threshold indicates the quantity of SR paths; or when weights of all first segment lists in the at least one first segment list are different, the first update threshold indicates the weight of the SR path.

In a specific implementation, the active path information further includes a transmission performance threshold; and the determining unit 602 is specifically configured to: obtain transmission performance parameters corresponding to SR paths for transmitting the traffic that are indicated by all the first segment lists in the at least one first segment list; and determine, as the available first segment list, a first segment list corresponding to an SR path whose transmission performance parameter value is less than the transmission performance threshold.

In a specific implementation, the transmission performance threshold includes one or more of a latency, jitter, or a packet loss.

In a specific implementation, the obtaining unit 601 is specifically configured to receive a control packet sent by a controller, where the control packet includes the SR policy.

In a specific implementation, the control packet includes a first type-length-value TLV, and a value field of the first TLV carries the first update threshold.

In a specific implementation, a reserved field of the first TLV carries the transmission performance threshold.

In a specific implementation, the control packet further includes a second TLV, and a value field of the second TLV carries the transmission performance threshold.

In a specific implementation, the control packet is a border gateway protocol BGP packet, or the control packet is a path computation element communication protocol PCEP packet.

In a specific implementation, the SR policy includes an SR policy based on multi-protocol label switching MPLS and an SR policy based on an internet protocol version 6 IPv6.

It should be noted that, for an implementation of each unit in this embodiment, refer to the related descriptions in the foregoing method embodiments. Details are not described in this embodiment again.

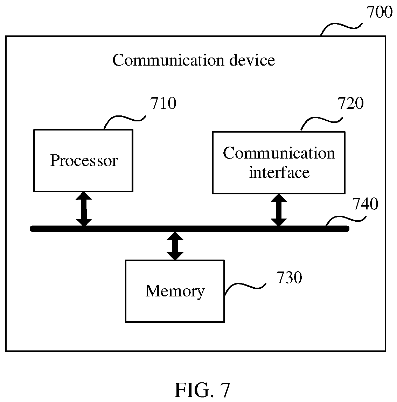

FIG. 7 is a diagram of a structure of a communication device according to an embodiment of this application. The communication device may be, for example, the first network device in the foregoing method embodiments, or may be implemented by a device of the apparatus 600 in the embodiment shown in FIG. 6.

A communication device 700 includes a processor 710, a communication interface 720, and a memory 730. There may be one or more processors 710 in the communication device 700, and one processor is used as an example in FIG. 7. In this embodiment of this application, the processor 710, the communication interface 720, and the memory 730 may be connected by using a bus system or in another manner. In FIG. 7, for example, they are connected by using a bus system 740.

The processor 710 may be a CPU, an NP, or a combination of a CPU and an NP. The processor 710 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 730 may include a volatile memory (volatile memory), for example, a random access memory (random access memory, RAM). Alternatively, the memory 730 may include a non-volatile memory (non-volatile memory), for example, a flash memory (flash memory), a hard disk drive (hard disk drive, HDD), or a solid-state drive (solid-state drive, SSD). Alternatively, the memory 730 may include a combination of the foregoing types of memories. The memory 730 may store, for example, the segment-routing SR policy mentioned above.

Optionally, the memory 730 stores an operating system and a program, an executable module or a data structure, or a subset thereof, or an extended set thereof. The program may include various operation instructions, to implement various operations. The operating system may include various system programs, to implement various basic services and process a hardware-based task. The processor 710 may read the program in the memory 730, to implement the transmission path determining method provided in embodiments of this application.

The memory 730 may be a storage component in the communication device 700, or may be a storage apparatus independent of the communication device 700.

The bus system 740 may be a peripheral component interconnect (peripheral component interconnect, PCI) bus, an extended industry standard architecture (extended industry standard architecture, EISA) bus, or the like. The bus system 740 may be classified into an address bus, a data bus, a control bus, and the like. For ease of representation, only one bold line is used for representation in FIG. 7, but this does not mean that there is only one bus or only one type of bus.

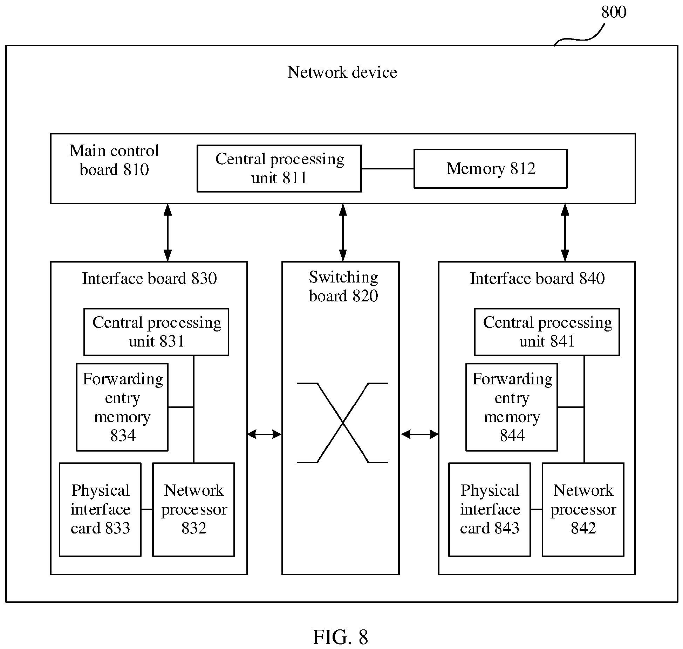

FIG. 8 is a diagram of a structure of a communication device 800 according to an embodiment of this application. The communication device may be, for example, the first network device in the foregoing method embodiments, or may be implemented by a device of the apparatus 600 in the embodiment shown in FIG. 6.

The communication device 800 includes a main control board 810 and an interface board 830.

The main control board 810 is also referred to as a main processing unit (main processing unit, MPU) or a route processor card (route processor card). The main control board 810 controls and manages components in the communication device 800, functions of route calculation, device management, device maintenance, and protocol processing. The main control board 810 includes a central processing unit 811 and a memory 88.

The interface board 830 is also referred to as a line processing unit (line processing unit, LPU), a line card (line card), or a service board. The interface board 830 is configured to provide various service interfaces, and forward a data packet. The service interface includes but is not limited to an Ethernet interface and a POS (Packet over SONET/SDH) interface. The Ethernet interface is, for example, a flexible Ethernet service interface (Flexible Ethernet Clients, FlexE Clients). The interface board 830 includes a central processing unit 831, a network processor 832, a forwarding entry memory 834, and a physical interface card (physical interface card, PIC) 833.

The central processing unit 831 on the interface board 830 is configured to control and manage the interface board 830, and communicate with the central processing unit 811 on the main control board 810.

The network processor 832 is configured to forward a packet. A form of the network processor 832 may be a forwarding chip. Specifically, processing on an uplink packet includes processing at a packet inbound interface, and forwarding table lookup, and processing on a downlink packet includes forwarding table lookup, and the like.

The physical interface card 833 is configured to implement an interconnection function at a physical layer. Original traffic enters the interface board 830 from the physical interface card 833, and a processed packet is sent from the physical interface card 833. The physical interface card 833 includes at least one physical interface, and the physical interface is also referred to as a physical port. The physical interface card 833, also referred to as a subcard, may be installed on the interface board 830, and is responsible for converting an optical/electrical signal into a packet, performing validity check on the packet, and forwarding the packet to the network processor 832 for processing. In some embodiments, the central processing unit 831 on the interface board 803 may also implement a function of the network processor 832, for example, implement software forwarding based on a general-purpose CPU. In this case, the network processor 832 is not required in the physical interface card 833.

Optionally, the communication device 800 includes a plurality of interface boards. For example, the communication device 800 further includes an interface board 840. The interface board 840 includes a central processing unit 841, a network processor 842, a forwarding entry memory 844, and a physical interface card 843.

Optionally, the communication device 800 further includes a switching board 820. The switching board 820 may also be referred to as a switch fabric unit (switch fabric unit, SFU). When the communication device has a plurality of interface boards 830, the switching board 820 is configured to complete data exchange between the interface boards. For example, the interface board 830 and the interface board 840 may communicate with each other via the switching board 820.

The main control board 810 is coupled to the interface board 830. For example, the main control board 810, the interface board 830, the interface board 840, and the switching board 820 are connected to a system backplane through a system bus to implement interworking. In a possible implementation, an inter-process communication (inter-process communication, IPC) channel is established between the main control board 810 and the interface board 830, and the main control board 810 communicates with the interface board 830 through the IPC channel.

Logically, the communication device 800 includes a control plane and a forwarding plane. The control plane includes the main control board 810 and the central processing unit 831. The forwarding plane includes components that perform forwarding, for example, the forwarding entry memory 834, the physical interface card 833, and the network processor 832. The control plane implements functions such as a router, generating a forwarding table, processing signaling and protocol packets, and configuring and maintaining a status of a device. The control plane delivers the generated forwarding table to the forwarding plane. On the forwarding plane, the network processor 832 performs table lookup and forwarding on a packet received by the physical interface card 833 based on the forwarding table delivered by the control plane. The forwarding table delivered by the control plane may be stored in the forwarding entry memory 834. In some embodiments, the control plane and the forwarding plane may be completely separated, and are not on a same device.

It should be understood that, in this embodiment of this application, an operation on the interface board 840 is consistent with an operation on the interface board 830. For brevity, details are not described again. It should be understood that the communication device 800 in this embodiment may correspond to the communication device in the foregoing method embodiments. The main control board 810, the interface board 830, and/or the interface board 840 in the communication device 800 may implement various steps in the foregoing method embodiments. For brevity, details are not described herein again.

It may be understood that, there may be one or more main control boards. When there are a plurality of main control boards, the main control boards may include an active main control board and a standby main control board. There may be one or more interface boards. A stronger data processing capability of the network device indicates a larger quantity of provided interface boards. There may also be one or more physical interface cards on the interface board. There may be no switching board or one or more switching boards. When there are a plurality of switching boards, load sharing and redundancy backup may be implemented together. In a centralized forwarding architecture, the network device may not need a switching board, and the interface board provides a function of processing service data of an entire system. In a distributed forwarding architecture, the network device may include at least one switching board, and data exchange between a plurality of interface boards is implemented via the switching board, to provide a large-capacity data exchange and processing capability. Therefore, a data access and processing capability of the network device in the distributed architecture is greater than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained by combining the two central processing units. This form of device (for example, a network device like a low-end switch or a router) has a weak data exchange and processing capability. A specific architecture that is to be used depends on a specific networking deployment scenario.

In some possible embodiments, the network device may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the network device. For example, the network device may be implemented based on a general-purpose physical server in combination with a network functions virtualization (network functions virtualization, NFV) technology. The network device is a virtual host, a virtual router, or a virtual switch. After reading this application, with reference to the NFV technology, a person skilled in the art may virtualize, on the general-purpose physical server, the network devices having the foregoing functions. Details are not described herein again.

It should be understood that the network devices in the foregoing various product forms have any function of the network device in the foregoing method embodiments. Details are not described herein again.

An embodiment of this application further provides a chip, including a processor and an interface circuit. The interface circuit is configured to receive instructions and transmit the instructions to the processor. The processor, for example, may be a specific implementation form of the transmission path determining apparatus 600 shown in FIG. 6, and may be configured to perform the foregoing transmission path determining method. The processor is coupled to a memory. The memory is configured to store a program or instructions. When the program or the instructions are executed by the processor, a chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field-programmable gate array (field-programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), or a programmable controller (programmable logic device, PLD) or another integrated chip.

An embodiment of this application further provides a computer-readable storage medium, including instructions or a computer program. When the instructions or the computer program is run on a computer, the computer is enabled to perform the transmission path determining method provided in the foregoing embodiments.

An embodiment of this application further provides a computer program product including instructions or a computer program. When the computer program product runs on a computer, the computer performs the transmission path determining method provided in the foregoing embodiments.

In the specification, claims, and accompanying drawings of this application, terms "first", "second", "third", "fourth", and so on (if present) are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, terms "include" and "have" and any other variants are intended to cover non-exclusive inclusions. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical service division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units. To be specific, the components may be located at one location, or may be distributed on a plurality of network units. Some or all of the units may be selected based on actual requirements to achieve the objectives of the solutions in embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

A person skilled in the art should be aware that in the foregoing one or more examples, the services described in this application may be implemented by using hardware, software, firmware, or any combination thereof. When implemented by using software, these services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium that can be accessed by a general-purpose or dedicated computer.

In the foregoing specific implementations, the objectives, technical solutions, and benefits of this application are further described in detail. It should be understood that the foregoing descriptions are merely specific implementations of this application.

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. A transmission path determining method, wherein the method comprises:
obtaining, by a first network device, a segment-routing SR policy, wherein the segment-routing policy comprises active path information and backup path information, the active path information comprises a first update threshold and at least one first segment list, the at least one first segment list indicates an SR path for traffic from the first network device to a second network device, and the first update threshold indicates a threshold used to update an SR path from the first network device to the second network device; and
determining, by the first network device, an updated transmission path based on the first update threshold and transmission performance of an SR path indicated by each of the at least one first segment list.

2. The method according to claim 1, wherein the determining, by the first network device, an updated transmission path based on the first update threshold and transmission performance of an SR path indicated by each of the at least one first segment list comprises:
determining, by the first network device, an available first segment list in the at least one first segment list based on the transmission performance of the SR path indicated by each of the at least one first segment list; and
when a segment list parameter value corresponding to the available first segment list in the at least one first segment list is less than the first update threshold, determining, by the first network device, an SR path indicated by at least one second segment list comprised in the backup path information as the updated transmission path.

3. The method according to claim 1, wherein the determining, by the first network device, an updated transmission path based on the first update threshold and transmission performance of an SR path indicated by each of the at least one first segment list comprises:
determining, by the first network device, an available first segment list in the at least one first segment list based on the transmission performance of the SR path indicated by each of the at least one first segment list;
when a segment list parameter value corresponding to the available first segment list in the at least one first segment list is less than the first update threshold, determining, by the first network device, an SR path indicated by an unavailable first segment list in the at least one first segment list as an invalid state;
selecting, by the first network device, a part of second segment lists from at least one second segment list comprised in the backup path information; and
replacing, by the first network device, the unavailable first segment list with the part of second segment lists, to obtain the updated transmission path.

4. The method according to claim 3, wherein
the first update threshold indicates a quantity of SR paths, and a quantity of the part of second segment lists is not less than a difference between the first update threshold and the segment list parameter value; or
the first update threshold indicates a weight of an SR path, and a sum of weights of the part of second segment lists is not less than a difference between the first update threshold and the segment list parameter value.

5. The method according to claim 4, wherein when weights of all first segment lists in the at least one first segment list are the same, the first update threshold indicates the quantity of SR paths; or when weights of all first segment lists in the at least one first segment list are different, the first update threshold indicates the weight of the SR path.

6. The method according to any one of claims 2 to 5, wherein the active path information further comprises a transmission performance threshold; and the determining, by the first network device, an available first segment list in the at least one first segment list based on the transmission performance of the SR path indicated by each of the at least one first segment list comprises:
obtaining, by the first network device, transmission performance parameters corresponding to SR paths for transmitting the traffic that are indicated by all the first segment lists in the at least one first segment list; and
determining, by the first network device as the available first segment list, a first segment list corresponding to an SR path whose transmission performance parameter value is less than the transmission performance threshold.

7. The method according to claim 6, wherein the transmission performance threshold comprises one or more of a latency, jitter, or a packet loss.

8. The method according to any one of claims 1 to 7, wherein the obtaining, by a first network device, a segment-routing SR policy comprises:
receiving, by the first network device, a control packet sent by a controller, wherein the control packet comprises the SR policy.

9. The method according to claim 8, wherein the control packet comprises a first type-length-value TLV, and a value field of the first TLV carries the first update threshold.

10. The method according to claim 9, wherein a reserved field of the first TLV carries the transmission performance threshold.

11. The method according to claim 9, wherein the control packet further comprises a second TLV, and a value field of the second TLV carries the transmission performance threshold.

12. The method according to any one of claims 8 to 11, wherein the control packet is a border gateway protocol BGP packet, or the control packet is a path computation element communication protocol PCEP packet.

13. The method according to any one of claims 1 to 12, wherein the SR policy comprises an SR policy based on multi-protocol label switching MPLS and an SR policy based on an internet protocol version 6 IPv6.

14. A transmission path determining apparatus, wherein the apparatus comprises an obtaining unit and a determining unit, wherein
the obtaining unit is configured to obtain a segment-routing SR policy, wherein the segment-routing policy comprises active path information and backup path information, the active path information comprises a first update threshold and at least one first segment list, the at least one first segment list indicates an SR path for traffic from a first network device to a second network device, and the first update threshold indicates a threshold used to update an SR path from the first network device to the second network device; and
the determining unit is configured to determine an updated transmission path based on the first update threshold and transmission performance of an SR path indicated by each of the at least one first segment list.

15. The apparatus according to claim 14, wherein the determining unit is specifically configured to: determine an available first segment list in the at least one first segment list based on the transmission performance of the SR path indicated by each of the at least one first segment list; and when a segment list parameter value corresponding to the available first segment list in the at least one first segment list is less than the first update threshold, determine an SR path indicated by at least one second segment list comprised in the backup path information as the updated transmission path.

16. The apparatus according to claim 14, wherein the determining unit is specifically configured to: determine an available first segment list in the at least one first segment list based on the transmission performance of the SR path indicated by each of the at least one first segment list; when a segment list parameter value corresponding to the available first segment list in the at least one first segment list is less than the first update threshold, determine an SR path indicated by an unavailable first segment list in the at least one first segment list as an invalid state; select a part of second segment lists from at least one second segment list comprised in the backup path information; and replace the unavailable first segment list with the part of second segment lists, to obtain the updated transmission path.

17. The apparatus according to claim 16, wherein
the first update threshold indicates a quantity of SR paths, and a quantity of the part of second segment lists is not less than a difference between the first update threshold and the segment list parameter value; or
the first update threshold indicates a weight of an SR path, and a sum of weights of the part of second segment lists is not less than a difference between the first update threshold and the segment list parameter value.

18. The apparatus according to claim 17, wherein when weights of all first segment lists in the at least one first segment list are the same, the first update threshold indicates the quantity of SR paths; or when weights of all first segment lists in the at least one first segment list are different, the first update threshold indicates the weight of the SR path.

19. The apparatus according to any one of claims 15 to 18, wherein the active path information further comprises a transmission performance threshold; and the determining unit is specifically configured to: obtain transmission performance parameters corresponding to SR paths for transmitting the traffic that are indicated by all the first segment lists in the at least one first segment list; and determine, as the available first segment list, a first segment list corresponding to an SR path whose transmission performance parameter value is less than the transmission performance threshold.

20. The apparatus according to claim 19, wherein the transmission performance threshold comprises one or more of a latency, jitter, or a packet loss.

21. The apparatus according to any one of claims 14 to 20, wherein the obtaining unit is specifically configured to receive a control packet sent by a controller, wherein the control packet comprises the SR policy.

22. The apparatus according to claim 21, wherein the control packet comprises a first type-length-value TLV, and a value field of the first TLV carries the first update threshold.

23. The apparatus according to claim 22, wherein a reserved field of the first TLV carries the transmission performance threshold.

24. The apparatus according to claim 23, wherein the control packet further comprises a second TLV, and a value field of the second TLV carries the transmission performance threshold.

25. The apparatus according to any one of claims 21 to 24, wherein the control packet is a border gateway protocol BGP packet, or the control packet is a path computation element communication protocol PCEP packet.

26. The apparatus according to any one of claims 14 to 25, wherein the SR policy comprises an SR policy based on multi-protocol label switching MPLS and an SR policy based on an internet protocol version 6 IPv6.

27. A communication device, wherein the device comprises a processor and a memory, wherein
the memory is configured to store instructions or a computer program; and
the processor is configured to execute the instructions or the computer program in the memory, so that the communication device performs the method according to any one of claims 1 to 13.

28. A computer-readable storage medium, comprising instructions, wherein when the instructions are run on a computer, the computer is enabled to perform the method according to any one of claims 1 to 13.

29. A computer program product, wherein the computer program product comprises a program, and when the program is run on a processor, a computer or a network device is enabled to perform the method according to any one of claims 1 to 13.
